# EUROPEAN PATENT APPLICATION

(11) **EP 2 433 992 A1**
(43) Date of publication of application: **28.03.2012**
(21) Application number: 10777754.2
(22) Date of filing: 18.05.2010
(51) Int. Cl.: C09J 4/06, C09J 7/02, C09J 11/04, C09J 11/08, G02B 5/20

(54) **ULTRAVIOLET-CURABLE ADHESIVE AGENT COMPOSITE, ADHESIVE AGENT LAYER, ADHESIVE SHEET, AND MANUFACTURING METHOD THEREFOR**

(30) Priority: 22.05.2009 JP 2009124393; 17.05.2010 JP 2010113212
(71) Applicant: Nitto Denko Corporation, Ibaraki-shi, Osaka 567-8680 (JP)
(72) Inventor: TANAKA, Akiko, Ibaraki-shi Osaka 567-8680 (JP); MOROISHI,Yutaka, Ibaraki-shi Osaka 567-8680 (JP); NAKANO, Fumiko, Ibaraki-shi Osaka 567-8680 (JP)
(74) Representative: Grünecker, Kinkeldey, Stockmair & Schwanhäusser
(86) International application number: PCT/JP2010/058355
(87) International publication number: WO 2010/134521

(57) **Abstract**

An ultraviolet-curable pressure-sensitive adhesive composition, comprising one or more monomer components comprising an acrylic monomer; an aromatic low-molecular-weight polymer having a weight-average molecular weight of 500 to 4000 inclusive, the molecular weight being according to gel permeation chromatography; and a photopolymerization initiator; wherein when the composition is turned into a pressure-sensitive adhesive layer, the haze value of the composition is 10% or less.

## Description

### TECHNICAL FIELD

The present invention relates to an ultraviolet-curable pressure-sensitive adhesive composition that is variously applicable and contains an aromatic low-molecular-weight polymer, and metal nanoparticles; a pressure-sensitive adhesive layer produced from the pressure-sensitive adhesive composition; and a pressure-sensitive adhesive sheet having a support and the pressure-sensitive adhesive layer on at least one surface of the support, and a manufacturing method therefor.

### BACKGROUND ART

Attempts have been made for improving properties of a pressure-sensitive adhesive or a polymer composition that is applicable into wide ranges, a typical example of the properties being the mechanical strength thereof, by incorporating an aromatic low-molecular-weight polymer, or nanoparticles that may be of various types into the pressure-sensitive adhesive or the polymer composition. As for the incorporation of the nanoparticles, it is general to adopt a method of dispersing the nanoparticles evenly into the composition by surface-treating the nanoparticles or by treating the composition in a dispersing machine that may be of various types.

For example, a silane coupling agent that may be of various types is added to silica gel in the form of a colloid 30 nm or less in (particle) size to subject the surface of the silica to modifying treatment, and then the resultant is mixed with a polymer solution to produce a pressure-sensitive adhesive, so that the volume shrinkage ratio is made small by the existence of the fine particles, whereby it is expected that an advantageous effect of making the adhesive force itself high is expressed (Patent Document 1).

Suggested is an invention of incorporating nanoparticles as a diffusible pressure-sensitive adhesive to make the contrast better, and making the field angle large (Patent Document 2). In this invention, however, a specific method of dispersing the particles stably is unclear.

Alternatively, disclosed is also a method of subjecting metal oxide particles having a size of 200 nm or less to surface treatment with a surface modifier, such as a long-chain aliphatic acid, an organosilane and the like, to disperse the particles into a monomer or some other, thereby producing a pressure-sensitive adhesive syrup (Patent Document 3).

Suggested is also an ultraviolet-shielding pressure-sensitive adhesive obtained by using an organic solvent capable of generating no acidic functional group to mix zinc oxide fine particles having a size of 0.2 µm or less with an acrylic polymer obtained by a copolymerization with a monomer having a hydroxyl group, and painting the resultant mixture (Patent Document 4).

However, when nanoparticles produced by use of any one of the methods in which surface treatment is conducted are dispersed into a composition that may be of various types, the nanoparticles aggregate in accordance with the type of the polymer therein. As a result, the composite material gets cloudy, so that a haze may be generated. Thus, it is necessary that the type of the solvent, surface modifier or coupling agent (used) is appropriately changed in accordance with the composition of the polymer. Actually, it is troublesome to perform a screening of making various investigations to attain an optimization. As the case may be, there is caused an inconvenience that a widely-usable solvent cannot be used.

### PRIOR ART DOCUMENTS

### Patent Documents

Patent Document 1: JP-A-2005-255706
Patent Document 2: JP-A-2005-301213
Patent Document 3: JP-A-2003-513122
Patent Document 4: JP-A-2005-213482

### SUMMARY OF THE INVENTION

### PROBLEMS TO BE SOLVED BY THE INVENTION

Thus, an object of the present invention is to provide a pressure-sensitive adhesive layer composition that contains a stably mixed aromatic low-molecular-weight polymer and is capable of forming, without undergoing any complicated step, a pressure-sensitive adhesive layer having a low haze value. Another object of the present invention is to provide a pressure-sensitive adhesive layer composition that contains an aromatic low-molecular-weight polymer and metal nanoparticles stably mixed, and is capable of forming, without undergoing any complicated step, a pressure-sensitive adhesive layer about which desired adhesive properties, a low haze value, and an improved refractive index are obtained.

Still another object of the present invention is to provide a pressure-sensitive adhesive layer produced from a pressure-sensitive adhesive composition as described just above; a pressure-sensitive adhesive sheet having the pressure-sensitive adhesive layer; and a method for manufacturing the sheet.

### MEANS FOR SOLVING THE PROBLEMS

In order to solve the problems, the inventors have made eager investigations to find out an ultraviolet-curable pressure-sensitive adhesive composition described below. Thus, the present invention has been made.

Accordingly, the present invention relates to an ultraviolet-curable pressure-sensitive adhesive composition, comprising one or more monomer components comprising an acrylic monomer; an aromatic low-molecular-weight polymer having a weight-average molecular weight of 500 to 4000 inclusive, the molecular weight being according to gel permeation chromatography; and a photopolymerization initiator; wherein when the composition is turned into a pressure-sensitive adhesive layer, the haze value of the composition is 10% or less.

It is preferred in the ultraviolet-curable pressure-sensitive adhesive composition that the aromatic low-molecular-weight polymer is contained in an amount of 10 to 100 parts by weight for 100 parts by weight of the monomer component(s), and the photopolymerization initiator is contained in an amount of 0.05 to 1.5 parts by weight therefor.

It is preferred that the ultraviolet-curable pressure-sensitive adhesive composition further comprises metal nanoparticles having an average particle diameter of 20 nm or less.

It is preferred in the ultraviolet-curable pressure-sensitive adhesive composition that the metal nanoparticles having an average particle diameter of 20 nm or less is contained in an amount of 10 to 100 parts by weight for 100 parts by weight of the monomer component(s).

It is preferred in the ultraviolet-curable pressure-sensitive adhesive composition that the average particle diameter of the metal nanoparticles is from 5 to 20 nm.

It is preferred in the ultraviolet-curable pressure-sensitive adhesive composition that the acrylic monomer is an alkyl (meth) acrylate represented by the following general formula: CH₂=C (R¹) COOR² wherein R¹ represents a hydrogen atom or a methyl group, and R² represents an alkyl group having 4 to 15 carbon atoms.

The present invention also relates to a pressure-sensitive adhesive layer which comprises the ultraviolet-curable pressure-sensitive adhesive composition recited in any one of the paragraphs 11-17, and has a haze value of 10% or less.

The present invention also relates to a method for manufacturing a pressure-sensitive adhesive sheet, comprising the step of painting the ultraviolet-curable pressure-sensitive adhesive composition recited in any one of the paragraphs onto at least one side of a support, and a subsequent step of radiating ultraviolet rays to the painted ultraviolet-curable pressure-sensitive adhesive composition to cure the pressure-sensitive adhesive composition, thereby forming a pressure-sensitive adhesive layer.

It is preferred in the pressure-sensitive adhesive sheet manufacturing method that the radiation of the ultraviolet rays is performed to give an accumulated irradiance of at least 5 J/cm².

It is preferred in the pressure-sensitive adhesive sheet manufacturing method that the ultraviolet-curable pressure-sensitive adhesive composition is a composition prepared by dissolving, into the monomer component (s), a solid yielded by mixing a liquid dispersion of metal nanoparticles with a solution of the aromatic low-molecular-weight polymer and then drying the mixture.

The present invention also relates to a method for manufacturing a pressure-sensitive adhesive sheet obtained by the manufacturing method according to any preceding method.

### EFFECTS OF THE INVENTION

As for the pressure-sensitive adhesive layer of the pressure-sensitive adhesive sheet yielded from the ultraviolet-curable pressure-sensitive adhesive composition of the present invention, the aromatic low-molecular-weight polymer is stably blended with the layer; thus, the layer has further increased mechanical properties, a low haze value, and a very good refractive index and adhesive force. When the ultraviolet-curable pressure-sensitive adhesive composition contains metal nanoparticles besides the aromatic low-molecular-weight polymer, the aromatic low-molecular-weight polymer and the metal nanoparticles are stably blended with the composition; thus, the composition has in particular increased mechanical properties, a low haze value, and a very good refractive index and adhesive force. As a result, the composition is usable for wide articles.

### EMBODIMENTS FOR CARRYING OUT THE INVENTION

The ultraviolet-curable pressure-sensitive adhesive composition of the present invention contains one or more monomer components including an acrylic monomer, and the monomer component (s) is/are cured by ultraviolet rays, thereby being formed into a pressure-sensitive adhesive. Of materials constituting the pressure-sensitive adhesive layer, the acrylic monomer is easily changed in physical properties or composition, and is very good in transparency and endurance.

The acrylic monomer is a compound having at least an acryloyl group or a methacryloyl group, and is, for example, an alkyl (meth)acrylate. The alkyl (meth)acrylate means an alkyl acrylate, and/or an alkyl methacrylate. In the present invention, the description "(meth)a" has such a meaning.

The alkyl group in the alkyl (meth)acrylate may be a substituted or unsubstituted alkyl group having 1 to 20 carbon atoms. The substituted or unsubstituted alkyl group having 1 to 20 carbon atoms denotes a linear or branched alkyl group, or a cyclic alkane. When the alkyl group is a substituted alkyl group, the substituent thereof is preferably an aryl group having 3 to 8 carbon atoms, or aryloxy group having 3 to 8 carbon atoms. The aryl group is not limited, and is preferably a phenyl group.

Examples of the alkyl (meth)acrylate include methyl (meth)acrylate, ethyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, isostearyl (meth)acrylate, phenoxyethyl (meth)acrylate, and benzyl (meth) acrylate. These may be used alone or in combination of two or more thereof.

Among the alkyl (meth)acrylate is preferably an alkyl (meth)acrylate, The alkyl (meth) acrylate is preferably an alkyl (meth)acrylate represented by the following general formula: CH₂=C(R¹) COOR² wherein R¹ represents a hydrogen atom or a methyl group, and R² represents an alkyl group having 4 to 15 carbon atoms from the viewpoint of the pressure-sensitive adhesive property thereof and the dispersion stability of metal nanoparticles therein. The alkyl (meth)acrylate is in particular preferably butyl (meth)acrylate.

In the present invention, from the viewpoint of the curability of the pressure-sensitive adhesive composition, the alkyl (meth) acrylate is used preferably in an amount of 50% or more by weight of the whole of the monomer camponent(s), more preferably in an amount of 60% or more thereof.

The entire amount of the monomer component (s) may be made of the alkyl (meth)acrylate. The monomer component(s) may further contain a hydroxide-group-containing monomer represented by the following formula: CH₂=C(R¹) COOR³OH wherein R¹ represents a hydrogen group or a methyl group, and R³ represents an alkylene group having 2 to 10 carbon atoms. The alkylene group may be in any one of linear chain, branched chain, and cyclic forms. In other words, this monomer is a monomer containing a hydroxyalkyl group having 2 or more carbon atoms and one hydroxyl group.

Examples of the hydroxyl-group-containing monomer include hydroxylalkyl (meth)acrylates such as 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and the like; and hydroxyalkylcycloalkyl (meth)acrylates such as 4-hydroxymethylcyclohexyl (meth)acrylate and the like. Of these hydroxyl-group-containing monomers, preferred are 4-hydroxybutyl (meth)acrylate, and 6-hydroxyhexyl (meth)acrylate.

When the composition contains, as one of the monomer components, the hydroxyl-group-containing monomer, the monomer is used in a proportion of 0.2 to 10% by weight of the whole of the monomer components. The proportion of the hydroxyl-group-containing monomer is preferably from 0.2 to 7% by weight, more preferably from 0.5 to 5% by weight. If the proportion of the used hydroxyl-group-containing monomer is too large, the monomer components may be damaged in curing stability. However, it is not preferred from the viewpoint of an improvement in the crosslinking-reaction-based heat resistance of the resultant polymer that the proportion of the used hydroxyl-group-containing monomer is too small.

As one or more of the monomer components in the present invention, copolymerizable monomers different from the acrylic monomer may be used alone or in combination as far as the obj ects of the present invention are not damaged. However, in the present invention, the above-mentioned (meth)acrylic polymer does not substantially contain any acid component. The wording "(polymer) does not substantially contain any acid component" means that the whole of the polymer does not contain any acid component at all, or even when the polymer contains an acid component, the amount thereof is less than 0.1% by weight of the polymer. The different monomer(s) is/are used preferably in an amount of 50% or less by weight of the whole of the monomer components, more preferably in an amount of 40% or less by weight thereof.

The different copolymerizable monomer(s) may (each) be a compound having a polymerizable unsaturated double bond, such as a vinyl group, besides the (meth)acryloyl group. Specific examples of the copolymerizable monomer(s) include vinyl monomers such as vinyl acetate, vinyl propionate, styrene, α-methylstyrene, N-vinylcaprolactam and the like; epoxy-group-containing monomers such as glycidyl (meth)acrylate, methylglycidyl (meth)acrylate, 3,4-epoxycyclohexylmethyl (meth) acrylate and the like; glycol acrylic ester monomers such as polyethylene glycol (meth)acrylate, polypropylene glycol (meth)acrylate, methoxyethylene glycol (meth)acrylate, methoxypolypropylene glycol (meth) acrylate and the like; acrylic acid ester monomers such as tetrahydrofurfuryl (meth)acrylate, fluoro(meth)acrylate, silicone (meth)acrylate, 2-methoxyethyl acrylate and the like; amide-group-containing monomers; amino-group-containing monomers; imide-group-containing monomers; N-acryloyl morpholine; vinyl ether monomers and the like.

The different copolymer monomer (s) may (each) be a silane monomer, which contains a silicon atom. Examples of the silane monomer include 3-acryloxypropyltriethoxysilane, vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-metharyloyloxydecyltriethaxysilane, 10-aryloyloxydecyltriethoxysilane and the like.

The composition may contain, as one of the monomer components, a polyfunctional monomer for improving the cohesive strength of the resultant pressure-sensitive adhesive layer. The polyfunctional monomer can attain a high cohesive strength without producing any effect onto the quality of the pressure-sensitive adhesive or the maintenance of the quality. Examples of the polyfunctional monomer include bifunctional monomers such as 1,4-butanediol di(meth)acrylate, 1,6-hexanediol di(meth)acrylate, 1,8-octanediol di(meth)acrylate, neopentyl glycol di(meth)acrylate, tripropylene glycol di(meth)acrylate, tetraethylene glycol di(meth)acrylate, bisphenol A diglycidyl ether di(meth)acrylate and the like; trifunctional or higher-polyfunctional monomers such as trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate and the like; and other polyfunctional acrylic monomers each related to an esterified product made from (meth)acrylic acid and a polyhydric alcohol or to some other, such as caprolactone-modified dipentaerythritol hexa(meth)acrylate and the like.

The polyfunctional monomer may be a polyfunctional monomer having two or more unsaturated double bonds such as vinyl groups and the like, or a polyester (meth) acrylate, epoxy (meth)acrylate, urethane (meth)acrylate or the like obtained by adding, to a skeleton of a polyester, an epoxy, a urethane or some other, two or more unsaturated double bonds, such as (meth) acryloyl groups, vinyl groups and the like, as functional groups equivalent or similar to the functional group(s) that the monomer component(s) has/have.

The proportion of the polyfunctional monomer used is preferably from 0 to 10% by weight of the whole of the monomer components. When the polyfunctional monomer is used, the proportion is preferably from 0.01 to 10% by weight, more preferably from 0.05 to 5% by weight. If the proportion of the polyfunctional monomer used is too large, the cohesive strength of the resultant pressure-sensitive adhesive layer becomes too large so that the adhesive property thereof may be declined.

The pressure-sensitive adhesive composition of the present invention contains the following besides the monomer component (s) : an aromatic low-molecular-weight polymer having a weight-average molecular weight of 500 to 4000 inclusive, the molecular weight being according to gel permeation chromatography; and a photopolymerization initiator. The pressure-sensitive adhesive composition of the present invention may optionally contain metal nanoparticles having an average particle diameter of 20 nm or less. In a case where the composition contains the metal nanoparticles, the refractive index of the resultant pressure-sensitive adhesive layer is particularly improved. Thus, the case is preferred.

The monomer that constitutes the aromatic low-molecular-weight polymer may be, for example, an aromatic-ring-containing monomer, which has an aromatic ring, having a polymerizable functional group having an unsaturated double bond, such as a (meth)acryloyl group or a vinyl group. Specific examples of the aromatic-ring-containing monomer include phenoxyethyl (meth)acrylate, benzyl (meth)acrylate, phenol ethylene oxide modified (meth) acrylate, 2-naphthoethyl (meth) acrylate, 2-(4-methoxy-1-naphtoxy)ethyl (meth) acrylate, phenoxypropyl (meth)acrylate, phenoxy diethylene glycol (meth) acrylate, polystyryl (meth) acrylate and the like. Other examples thereof include styrene, styrene derivatives such as α methyl styrene, vinyl toluene, α vinyl toluene and the like.

The weight-average molecular weight (of the aromatic low-molecular polymer) is from 500 to 4000 inclusive, preferably from 700 to 3000 inclusive, more preferably from 1000 to 2000 inclusive. If the molecular weight is out of this range, the composition obtains no transparency and produces only a small effect of stabilizing the metal nanoparticles. Thus, the metal nanoparticles may aggregate.

The method for synthesizing the low-molecular-weight polymer may be any method, such as a method of using, in an ordinary radical polymerization, mercaptan or an α methylstyrene dimer to adjust the molecular weight (of the resultant), or a living radical polymerization or anion polymerization method using a polymerization initiator in the presence of a transition metal and a ligand.

The content of the aromatic low-molecular-weight polymer is preferably from 10 to 100 parts by weight, more preferably from 10 to 80 parts by weight, even more preferably from 10 to 70 parts by weight, even more preferably from 10 to 60 parts by weight for 100 parts by weight of the monomer component(s) in terms of solid amount. If the content is smaller than this amount, the pressure-sensitive adhesive layer is not improved in refractive index and the metal nanoparticles may aggregate. If the amount is too large, a change is unfavorably made in physical properties of the acrylic polymer yielded by curing the monomer component(s).

The metal nanoparticles contained in the pressure-sensitive adhesive composition of the present invention contain, for example, silica or a metal oxide that may be of various types although the particles are not limited to this form. Specific examples of the metal nanoparticles include silica, alumina, titania, zirconia, tin oxide, indium oxide, cadmium oxide, antimony oxide, ceria, zinc oxide, iron oxide, germanium oxide, indium oxide, silicon nitride, boron nitride, potassium titanate, wollastonite, sepiolite, needle tin oxide, needle magnesium hydroxide, lamellar clay minerals, and combinations thereof. The metal nanoparticles are used in the form of a liquid dispersion.

The shape or form of the metal nanoparticles may be a sphere, a rectangular parallelepiped, a deformed form thereof or any other bulk form, a needle form, or a tabular form.

The average particle diameter of the metal nanoparticles is 20 nm or less, preferably from 5 to 20 nm, more preferably from 5 to 10 nm. When the particles are in a needle or tabular form, the maximum length thereof is 20 nm or less, preferably from 5 to 20 nm, more preferably from 5 to 10 nm. The average particle diameter is measured by a dynamic light scattering method using an instrument "Zetasizer NANO model ZS" manufactured by Malvern Co., and is represented as the number-average particle diameter (of the nanoparticles).

These metal nanoparticles may be stabilized by treating surfaces of the metal nanoparticles with a dispersion stabilizer such as a silane coupling agent and the like although the treatment is not essential.

Examples of the dispersion stabilizer include silane coupling agents such as octylmethoxysilane, γ-mercaptopropyltrimethoxysilane, -methacryloxypropyltrimethoxysilane, -glycidoxypropyltrimethoxysilane, vinyltrimethoxysilane and the like; long-chain aliphatic acids such as lauric acid and the like, and oleic acid; and silicone compounds each modified with an organic substance that may be of various types.

The dispersion stabilizers may be used alone or in the form of a mixture of two or more thereof. The amount thereof necessary for treating the whole of the metal nanoparticles is from 1 to 80 parts by weight for 100 parts by weight of the metal nanoparticles.

When the pressure-sensitive adhesive composition of the present invention further contains the metal nanoparticles, the use amount thereof is from 10 to 100 parts by weight, preferably from 10 to 80 parts by weight, more preferably from 10 to 70 parts by weight, even more preferably from 10 to 60 parts by weight for 100 parts by weight of the monomer component(s) in terms of solid amount. If the content thereof is smaller than this amount, properties of the metal nanoparticles cannot be exhibited. If the content is too large, physical properties of the acrylic polymer yielded by curing the monomer component(s) is unfavorably changed.

The photopolymerization initiator used in the present invention is not particularly limited as far as the initiator is an initiator that attains the initiation of photopolymerization. The initiator may be an ordinarily used photopolymerization initiator. Examples thereof include benzoin ether based, acetophenone based, α-ketol based, optically active oxime based, benzoin based, benzyl based, benzophenone based, ketal based, thioxanthone based initiators and the like.

Specific examples of the benzoin ether based initiator include benzoin methyl ether, benzoin ethyl ether, benzoin propyl ether, benzoin isopropyl ether, benzoin isobutyl ether, 2,2-dimethoxy-1,2-diphenylethane-1-one, anisole methyl ether and the like. Examples of the acetophenone based initiator include 2,2-diethoxyacetophenone, 2,2-dimethoxy-2-phenylacetophenone, 1-hydroxycyclohexyl phenyl ketone, 4-phenoxydichloroacetone, 4-t-butyldichloroacetophenone and the like. Examples of the α-ketol based initiator include 2-methyl-2-hydroxypropiopnenone, 1-[4-(2-hydroxyethyl)phenyl]-2-hydroxy-2-methylpropane-1-on e and the like. Examples of the optically active oxime based initiator include 1-phenyl-1, 1-propanedione-2- (o-ethoxycarbonyl) -oxime and the like. Examples of the benzoin based initiator include benzoin and the like. Examples of the benzyl based initiator include benzyl and the like. Examples of the benzophenone based initiator include benzophenone, benzoylbenzoic acid, 3,3'-methyl-4-methoxybenzophenone, polyvinylbenzophenone, α-hydroxycyclohexylbenzophenone and the like. Examples of the ketal based initiator include benzyl methyl ketal and the like. Examples of the thioxanthone based initiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, dodecylthioxantone and the like. The photopolymerization initiators may be used alone or in the form of a mixture of two or more thereof.

The use amount of the photopolymerization initiator is from 0.05 to 1.5 parts by weight, preferably from 0.1 to 1 part by weight for 100 parts by weight of the monomer component (s).

The pressure-sensitive adhesive composition of the present invention may further contain other known additives. For example, the following may be appropriately added thereto in accordance with an article in which the composition is used: powders made of a colorant, a pigment or some other, a dye, a surfactant, a plasticizer, a binder, a surface lubricating agent, a leveling agent, a softening agent, an antioxidant, an anti-ageing agent, a light stabilizer, an ultraviolet absorbent, a polymerization inhibitor, an inorganic or organic filler, a metallic powder, a granular substance and/or a foil substance.

The method for preparing the pressure-sensitive adhesive composition is not particularly limited as far as the method causes the above-mentioned individual components to be contained therein. It is preferred from the viewpoint of making the process easy to prepare a solid at first by mixing a liquid dispersion of metal nanoparticles with a solution of an aromatic low-molecular polymer and drying the mixture; and then dissolve the solid into one or more monomer components. The dispersing medium of the liquid dispersion of the metal nanoparticles is water or an organic solvent. The solution of the aromatic low-molecular polymer is used as a solution in an organic solvent such as toluene, ethyl acetate, methyl ethyl ketone and the like. The solid is yielded, from the mixture of the liquid dispersion of the metal nanoparticles and the solution of the aromatic low-molecular polymer, ordinarily by drying the mixture by removing the solvent at room temperature without giving heat thereto. In the preparation of the pressure-sensitive adhesive composition, the timing when a photopolymerization initiator, and other additives are added may be any timing. Usually, it is preferred to blend these components after the solid is dissolved into the monomer component(s).

The pressure-sensitive adhesive sheet of the present invention is yielded through the step of painting the pressure-sensitive adhesive composition onto at least one side of a support, and a subsequent step of radiating ultraviolet rays to the painted ultraviolet-curable pressure-sensitive adhesive composition to cure the pressure-sensitive adhesive composition, thereby forming a pressure-sensitive adhesive layer.

The method for painting the pressure-sensitive adhesive composition is appropriately selected in accordance with the viscosity of the pressure-sensitive adhesive composition and a target thickness. Specific examples thereof include roll coating, kiss roll coating, gravure coating, reverse coating, roll brushing, spray coating, dip roll coating, bar coating, knife coating, air knife coating, curtain coating, lip coating extrusion coating by use of a die coater, and the like.

The painting of the pressure-sensitive adhesive composition is performed to set the thickness of the pressure-sensitive adhesive layer yielded by curing the composition into the range of about 1 to 100 µm, preferably 2 to 50 µm, more preferably 2 to 40 µm, even more preferably 5 to 35 µm.

Next, ultraviolet rays are radiated to the painted pressure-sensitive adhesive composition to cure the composition, thereby forming a pressure-sensitive adhesive layer. For the radiation of the ultraviolet rays, a high-pressure mercury lamp, a low-pressure mercury lamp, a metal halide lamp, or some other may be used. The condition for the ultraviolet ray radiation may be any appropriate condition as far as the condition makes it possible to cure the pressure-sensitive adhesive composition. The accumulated irradiance of the radiated ultraviolet rays is preferably 5 J/cm² or more, more preferably 15 J/cm² or more. The irradiance is more preferably 30 J/cm² or more, even more preferably 60 J/cm², in particular, when the pressure-sensitive adhesive composition is a composition containing metal nanoparticles. The irradiance of the radiated ultraviolet rays is considerably larger than any conventional ultraviolet-ray-irradiance for curing. It is assumed that by the large-irradiance radiation of the ultraviolet rays, some effect is produced by a change in the materials (of the composition), the polymerization rate, the temperature or some other although a reason therefor is unclear. It is assumed that by radiating the large-irradiance ultraviolet rays to the pressure-sensitive adhesive composition containing the metal nanoparticles, which are small in particle diameter, and the aromatic low-molecular polymer, the haze value (of the resultant) can be controlled into a small value. The accumulated irradiance of the radiated ultraviolet rays is preferably 150 J/cm² or less from the viewpoint of a deterioration of the pressure-sensitive adhesive layer.

It is preferred that the ultraviolet rays are radiated in the state that the painted pressure-sensitive adhesive composition is further covered with another support. In other words, it is preferred that the ultraviolet rays are radiated in the state that the pressure-sensitive adhesive composition are sandwiched between two supports so that there is not oxygen, which hinders the polymerization of the monomer component(s) that is related to the curing of the pressure-sensitive adhesive composition. To create the state that the pressure-sensitive adhesive composition is sandwiched between the two supports, a known or conventional means or manner is used. The manner is, for example, a manner of painting the pressure-sensitive adhesive composition onto one of the supports by the above-mentioned method, curing the composition to some degree, and then laying the other support onto the cured composition, or a manner of inserting the pressure-sensitive adhesive composition directly into the two supports.

The supports may each be a substrate that may be of various types. When ultraviolet rays are radiated in the state that the pressure-sensitive adhesive composition is sandwiched between the two supports as described above, the supports are preferably supports having a property of being oxygen-impermeable, and are also preferably transparent films having such a transparency that the photopolymerization of the monomer component(s) by effect of the ultraviolet rays is not hindered. The supports are each preferably a film subjected to releasing treatment. This is because after the formation of the pressure-sensitive adhesive layer thereon, the layer is easily transferred onto a different substrate. The film subjected to releasing treatment is preferably a peelable silicone liner.

The constituting material of the supports is, for example, a plastic film such as a polyethylene, polypropylene, polyethylene terephthalate, polyester film and the like; a porous material such as paper, cloth, nonwoven cloth and the like; a net; a foamed sheet; a metal foil; and an appropriate thin sheet such as a laminate composed of two or more of these examples, and the like. A plastic film is preferably used since the film is excellent in surface smoothness.

Examples of the plastic film include a polyethylene film, a polypropylene film, a polybutene film, a polybutadiene film, a polymethylpentene film, a polyvinyl chloride film, a vinyl chloride copolymer, a polyethylene terephthalate film, a polybutylene terephthalate film, a polyurethane film, an ethylene/vinyl acetate copolymer film and the like.

The thickness of the film is usually from about 5 to 200 µm, preferably from about 5 to 100 µm. The above-mentioned separator may be optionally subjected to releasing and anti-fingerprint treatment with a silicone based, fluorine-containing based, long-chain-alkyl based, or aliphatic-acid-amide release agent, or silica powder, or to a painting based, kneading based or vapor-depositing mode antistatic treatment. The separator can be made higher in peelability from the pressure-sensitive adhesive layer, in particular, by subjecting a surface of the film appropriately to silicone treatment, long-chain-alkyl treatment, fluorine treatment or some other releasing treatment.

As for the resultant pressure-sensitive adhesive sheet, the haze value of its pressure-sensitive adhesive layer is 10% or less, preferably 8% or less, more preferably 5% or less. If the haze value is more than 10%, the transmittance of a product obtained when the sheet is laminated onto an optical member is unfavorably lowered to a large extent. The matter that the haze value is 10% or less means that the aromatic low-molecular polymer is stably blended with the polymer of the acrylic monomer component, as demonstrated by results of working examples that will be described later. Furthermore, the matter means that even when metal nanoparticles are blended therewith, the resultant pressure-sensitive adhesive layer is not cloudy so that the metal nanoparticles are evenly dispersed. Thus, about the pressure-sensitive adhesive in the present invention, the haze value does not become large, and further the transmittance is hardly lowered. When the metal nanoparticles are blended therewith, this haze value can be attained by radiating ultraviolet rays, in particular, radiating large-irradiance ultraviolet rays to the pressure-sensitive adhesive composition containing the metal nanoparticles, which is small in particle diameter, and the aromatic low-molecular polymer.

The pressure-sensitive adhesive sheet yielded as described above may be used after peeled from the support(s) and transferred to a different substrate. The different substrate is, for example, an optical member. The optical member may be a member used to form an image display device, such as a liquid crystal display device, and is not particularly limited in kind. The optical member may be, for example, a polarizing plate. As the polarizing plate, use is generally made of a polarizing plate including a polarizer having, on a single surface or each surface thereof, a transparent protecting film.

The optical member is, for example, an optical member that becomes an optical layer that may be used to form a liquid crystal display device; examples of this member include a reflector, an impermeable plate, the above-mentioned retardation plate or film, which may be, for example, a half wavelength plate or a quarter wavelength plate, a viewing angle compensation film, and a brightness enhancement film. These may be used alone as an optical film. Alternatively, when put into practical use, these may be used alone in the form of a layer or used in the form of two or more layers in the state of being laminated alone or in combination onto a polarizing plate as described above.

### EXAMPLES

Hereinafter, the present invention will be specifically described by way of working examples; however, the present invention is not limited by the examples. The word "part(s)" and symbol "%" in each of the examples denote part (s) by weight and % by weight, respectively. Conditions that any member was allowed to stand still at room temperature denote conditions that the member was allowed to stand still at 23°C and a relative humidity of 65% (for one hour or one week) unless otherwise specified. About evaluating items in the working examples, and other examples, measurements were made as follows:

### <Measurement of Weight-Average Molecular Weight>

The weight-average molecular weight of any aromatic low-molecular polymer was measured by GPC (gel permeation chromatography). As a sample, use was made of a filtrate obtained by dissolving a specimen into tetrahydrofuran to prepare a 0.1% by weight solution thereof, allowing this solution to stand still all night, and then filtrate the solution through a membrane filter 0.45 µm in mesh. Analysis device: HLC-8120 GPC manufactured by Tosoh Corp. Columns: G3000H_{XL}+ 2000H_{XL} + G1000H_{XL}, manufactured by Tosoh Corp.
Each column size: 7.8 mm in diameter x 30 cm (90 cm as a whole)
Flow rate: 0.8 mL/min.
Detector: differential refractometer (RI)
Column temperature: 40°C
Injection amount: 100 µL
Eluent: tetrahydrofuran
Detector: differential refractometer
Standard sample: polystyrene

### Example 1

The following were mixed with each other: 100 parts of n-butyl acrylate; 1 part of 4-hydroxybutyl acrylate; 0.05 part of a photopolymerization initiator (IRGACURE 651, manufactured by Ciba Japan K.K.); and 0.4 part of a photopolymerization initiator (IRGACURE 184, manufactured by Ciba Japan K.K.). The system was sufficiently purged with nitrogen, and then a high-pressure mercury lamp (UVA irradiance: 0.271 W/cm²) was intermittently turned on for 5 minutes (toward the system) to yield a viscous syrup. In this syrup, the polymerization rate of the monomers was 12.5%. Into this syrup were incorporated 1.0 part of trimethylolpropane triacrylate and 20 parts of a low-molecular-weight styrene polymer (SX-85, manufactured by Yasuhara Chemical Co., Ltd.; weight-average molecular weight Mw= 1550), and then these components were mixed with each other into an even state to prepare an ultraviolet-curable pressure-sensitive adhesive composition. This ultraviolet-curable pressure-sensitive adhesive composition was painted onto a single surface of a polyethylene terephthalate (PET) film subjected to the silicon treatment (DIAFOIL MRN38, manufactured by Mitsubishi Polyester Film Corp.) 38 µm in thickness to give a pressure-sensitive adhesive layer having a thickness of 30 µm after the layer would be cured. In order to prevent the hindrance of the polymerization based on oxygen in the air, a PET film subjected to the same silicone treatment was laid thereon. Thereafter, ultraviolet rays from a metal halide lamp were radiated thereto at an accumulated irradiance of 15 J/cm² through the films. Thereafter, the PET film on one of the surfaces was peeled, and in this state the workpiece was thermally treated at 150°C for 3 minutes to produce a pressure-sensitive adhesive sheet. The radiation of the ultraviolet rays was performed by means of a fusion UV conveyor (CV-l10Q-G; power source: VPS-6) through a D valve and a quartz filter. The irradiance was represented as an accumulated irradiance of UVA (320-390 nm), UVB (280-320 nm), UVC (250-260 nm) and UVV (395-445 nm) from a UV power pack.

### Example 2

A pressure-sensitive adhesive sheet was produced in the same way as in Example 1 except that the styrene polymer was changed to a low-molecular-weight styrene polymer (SX-100, manufactured by Yasuhara Chemical Co., Ltd.; Mw = 2000).

### Example 3

A pressure-sensitive adhesive sheet was produced in the same way as in Example 1 except that the irradiance of the ultraviolet rays was changed to an accumulated irradiance of 5 J/cm².

### Example 4

The following were mixed with each other: 15 parts (in terms of solid amount) of a liquid dispersion of a zirconia (NZD-3JF95-E, manufactured by Sumitomo Osaka Cement Co., Ltd.) having an average particle diameter of 7 nm; and 22.5 parts (in terms of solid amount) of a low-molecular-weight styrene polymer dissolved in toluene (Picolastic A75, manufactured by Eastman Chemical Co. ; Mw: 1320). The mixture was dried at room temperature (23°C) to be turned into solid components. The following were mixed with each other: 100 parts of n-butyl acrylate; 1 part of 4-hydroxybutyl acrylate; 0.5 part of trimethylolpropane triacrylate; the above-mentioned solid components; 0.5 part of a photopolymerization initiator (IRGACURE 651, manufactured by Ciba Japan K.K.); and 0.2 part of a photopolymerization initiator (IRGACURE 184, manufactured by Ciba Japan K.K.). In this way, an ultraviolet-curable pressure-sensitive adhesive composition was prepared. This ultraviolet-curable pressure-sensitive adhesive composition was painted onto a single surface of a polyethylene terephthalate (PET) film subjected to the silicon treatment (DIAFOIL MRN38, manufactured by Mitsubishi Polyester Film Corp.) 38 µm in thickness to give a pressure-sensitive adhesive layer having a thickness of 30 µm after the layer would be cured. The same PET film was laid thereon. Thereafter, ultraviolet rays from a metal halide lamp were radiated thereto at an accumulated irradiance of 105 J/cm² through the films. Thereafter, the PET film on one of the surfaces was peeled, and in this state the workpiece was thermally treated at 150°C for 3 minutes to produce a pressure-sensitive adhesive sheet. The radiation of the ultraviolet rays was performed by means of a fusion UV conveyor (CV-110Q-G; power source: VPS-6) through a D valve and a quartz filter. The irradiance was represented as an accumulated irradiance of UVA (320-390 nm), UVB (280-320 nm), UVC (250-260 nm) and UVV (395-445 nm) from a UV power pack.

### Example 5

A pressure-sensitive adhesive sheet was produced in the same way as in Example 4 except that the irradiance of the ultraviolet rays was changed to an accumulated irradiance of 30 J/cm².

### Comparative Example 1

A pressure-sensitive adhesive sheet was produced in the same way as in Example 1 except that the styrene polymer was changed to a low-molecular-weight styrene polymer (Mw=6000).

### Comparative Example 2

A pressure-sensitive adhesive sheet was produced in the same way as in Example 4 except that no low-molecular-weight styrene polymer was used.

### Comparative Example 3

A pressure-sensitive adhesive sheet was produced in the same way as in Example 4 except that instead of the liquid dispersion of the zirconia (NZD-3JF95-E, manufactured by Sumitomo Osaka Cement Co., Ltd.), the average particle diameter of which was 7 nm, a liquid dispersion of a zirconia (NZ110-F1510, manufactured by Sumitomo Osaka Cement Co., Ltd.) having an average particle diameter of 40 nm was used.

### Comparative Example 4

A pressure-sensitive adhesive sheet was produced in the same way as in Example 3 except that no low-molecular-weight styrene polymer was used.

Evaluations described below were made about the pressure-sensitive adhesive sheets (samples) yielded in the working examples and the comparative examples. The evaluation results are shown in Table 1.

### <Haze>

Each of the pressure-sensitive adhesive sheet samples, 10 mm in width, yielded in the working examples and the comparative examples was caused to adhere onto a PET film (Lumilar-25-S10, manufactured by Toray Industries, Inc.) 25 µm in thickness. D-65 light was used to measure the haze value of the sample at an atmospheric temperature of 25°C by means of a reflectance/transmittance meter, model HR-100, manufactured by Murakami Color Research Laboratory Co., Ltd. according to JIS K-7136.

### <Refractive index>

Sodium D ray lines were radiated onto each of the samples yielded in the working examples and the comparative examples in an atmosphere 25°C in temperature, and an Abbe refractometer (DR-M2, manufactured by Atago Co., Ltd.) was used to measure the refractive index thereof.

### <Adhesive power>

A PET film (Lumilar-25-S10, manufactured by Toray Industries, Inc.) 25 µm in thickness was caused to adhere onto the pressure-sensitive adhesive layer surface of each of the samples yielded in the working examples and the comparative examples, and then the resultant was cut into a piece 20 mm in width and about 100 mm in length. From this piece, the PET film subjected to the silicon treatment in the sample was peeled. The piece was caused to adhere onto a non-alkali glass plate (1737, manufactured by Corning Inc.) 0.5 mm in thickness by effect of a single reciprocative movement of a roll 2 kg in weight. Next, the resultant was subjected to autoclave treatment at 50°C and 0.5 MPa for 30 minutes to cause the piece to adhere completely onto the plate. The resultant was then allowed to stand still at 23°C and a humidity of 50% for 3 hours. Thereafter, the peeling adhesion (of the sample) was measured at a peeling angle of 90° and a peeling rate of 300 mm/minute.

**[Table 1]**

| | Low-molecular-weight styrene based polymer (Mw) | (%) | Haze Thickness (µm) | Refractive index (n_{D}) | Adhesive power (N/20nm) |
|---|---|---|---|---|---|
| Example 1 | 1550 | 3.6 | 35 | 1.488 | 1.8 |
| Example 2 | 2000 | 4.0 | 35 | 1.488 | 2.0 |
| Example 3 | 1550 | 3.5 | 35 | 1.487 | 2.1 |
| Example 4 | 1320 | 3.8 | 30 | 1.500 | 12.5 |
| Example 5 | 1320 | 7.0 | 30 | 1.500 | 16.3 |
| Comparative Example 1 | 6000 | 35.2 | 35 | * | 2.3 |
| Comparative Example 2 | - | 11.4 | 30 | 1.479 | 4.2 |
| Comparative Example 3 | 1320 | 65.2 | 30 | * | 12.8 |
| Comparative Example 4 | - | 3.3 | 35 | 1.464 | 4.6 |

| | | | | | |
|---|---|---|---|---|---|
| * : The value was high so that the value was unable to be measured with the Abbe refractometer. | | | | | |

## Claims

1. An ultraviolet-curable pressure-sensitive adhesive composition, comprising one or more monomer components comprising an acrylic monomer;
an aromatic low-molecular-weight polymer having a weight-average molecular weight of 500 to 4000 inclusive, the molecular weight being according to gel permeation chromatography; and
a photopolymerization initiator;
wherein when the composition is turned into a pressure-sensitive adhesive layer, the haze value of the composition is 10% or less.

2. The ultraviolet-curable pressure-sensitive adhesive composition according to claim 1, wherein the aromatic low-molecular-weight polymer is contained in an amount of 10 to 100 parts by weight for 100 parts by weight of the monomer component(s), and
the photopolymerization initiator is contained in an amount of 0.05 to 1.5 parts by weight therefor.

3. The ultraviolet-curable pressure-sensitive adhesive composition according to claim 1, which further comprises metal nanoparticles having an average particle diameter of 20 nm or less.

4. The ultraviolet-curable pressure-sensitive adhesive composition according to claim 3, wherein the metal nanoparticles having an average particle diameter of 20 nm or less is contained in an amount of 10 to 100 parts by weight for 100 parts by weight of the monomer component(s).

5. The ultraviolet-curable pressure-sensitive adhesive composition according to claim 3, wherein the average particle diameter of the metal nanoparticles is from 5 to 20 nm.

6. The ultraviolet-curable pressure-sensitive adhesive composition according to claim 1, wherein the acrylic monomer is an alkyl (meth) acrylate represented by the following general formula:
CH₂=C (R¹) COOR²
wherein R¹ represents a hydrogen atom or a methyl group, and R² represents an alkyl group having 4 to 15 carbon atoms.

7. A pressure-sensitive adhesive layer, which comprises the ultraviolet-curable pressure-sensitive adhesive composition according to any one of claims 1 to 6, and has a haze value of 10% or less.

8. A method for manufacturing a pressure-sensitive adhesive sheet, comprising the step of painting the ultraviolet-curable pressure-sensitive adhesive composition according to any one of claims 1 to 6 onto at least one side of a support, and a subsequent step of radiating ultraviolet rays to the painted ultraviolet-curable pressure-sensitive adhesive composition in order to cure the pressure-sensitive adhesive composition, thereby forming a pressure-sensitive adhesive layer.

9. The pressure-sensitive adhesive sheet manufacturing method according to claim 8, wherein the radiation of the ultraviolet rays is performed to give an accumulated irradiance of at least 5 J/cm².

10. The pressure-sensitive adhesive sheet manufacturing method according to claim 8, wherein the ultraviolet-curable pressure-sensitive adhesive composition is a composition prepared by dissolving, into the monomer component (s), a solid yielded by mixing a liquid dispersion of metal nanoparticles with a solution of the aromatic low-molecular-weight polymer and then drying the mixture.

11. A pressure-sensitive adhesive sheet obtained by the manufacturing method according to claim 8.

12. A pressure-sensitive adhesive sheet obtained by the manufacturing method according to claim 9.
